**Europäisches Patentamt**

**European Patent Office**

**Office européen des brevets**

(19)

(11) Veröffentlichungsnummer: **0 044 056**

**A2**

(12) # EUROPÄISCHE PATENTANMELDUNG

(21) Anmeldenummer: **81105398.2**

(22) Anmeldetag: **10.07.81**

(51) Int. Cl.³: **G 01 N 27/22**

(30) Priorität: **12.07.80 PL 225616**

(43) Veröffentlichungstag der Anmeldung:
**20.01.82 Patentblatt 82/3**

(84) Benannte Vertragsstaaten:
**AT CH DE FR GB IT LI NL**

(71) Anmelder: **AKADEMIA GORNICZO-HUTNICZA im. Stanislawa Staszica**
**Al. Mickiewicza 30**
**Krakow(PL)**

(72) Erfinder: **Keska, Jerzy**
**ul. Na Blonie 11/149**
**Krakow(PL)**

(72) Erfinder: **Mlost, Edward**
**ul. Kliny 4/17**
**Kraków(PL)**

(72) Erfinder: **Borys, Stanislaw**
**ul. Luzycka 53/21**
**Kraków(PL)**

(72) Erfinder: **Cieplinski, Andrzej**
**ul. Gnieznienska 22/103**
**Kraków(PL)**

(74) Vertreter: **Ebbinghaus, Dieter K.L. Schiff Dr. A. v. Füner et al,**
**Dipl. Ing. P. Strehl Dr. U. Schübel-Hopf Dipl. Ing. D. Ebbinghaus Dr. Ing. D. Finck Patentanwälte**
**Mariahilfplatz 2&3**
**D-8000 München 90(DE)**

(54) **Messschaltung einer Vorrichtung zur Messung der Konzentration von Gemischbestandteilen.**

(57) Die Meßschaltung zur Messung der Konzentration von Gemischbestandteilen enthält zwei einen Kapazitätswandler (1) bildende Vergleichspfade der Eich- und Meßfrequenzsignale, welche parallel an den Ausgang eines Mischers (2) angeschlossen sind. Der Mischer (2) ist in Reihe über den Verstärker (5) und den Sender (15) der Übertragungsleitung mit der Schaltung (6) zur weiteren Signalverarbeitung verbunden, welche einen in Reihe über eine Differenzsignalnormalisierungsschaltung (7) und eine regelbare Zeitintegrierschaltung (17) geschalteten Empfänger (16) der Übertragungsleitung und einen Ausgangsverstärker (18) mit einer Konzentrationsanzeigeschaltung (8) enthält. Mit dem einen Bestandteil des Pfades der Meßfrequenzsignale bildenden Meßgenerator (4) sind über eine Umschaltschaltung (19) die Anschlußbuchse (20) eines kapazitiven Gebers und eine Skalenkalibrierschaltung (21) verbunden und über eine Addierschaltung (22) sind über entsprechende Diodenfunktionsgeneratoren (23, 24, 25) und Wandler (29, 30, 31) die Anschlußbuchsen eines Temperaturfühlers (26), einer Druckmeßdose (27) und eines Resistenzfühlers (28) verbunden.

EP 0 044 056 A2

PATENTANWÄLTE

SCHIFF v. FÜNER STREHL SCHÜBEL-HOPF EBBINGHAUS FINCK

MARIAHILFPLATZ 2 & 3, MÜNCHEN 90
POSTADRESSE: POSTFACH 95 01 60, D-8000 MÜNCHEN 95

ALSO PROFESSIONAL REPRESENTATIVES
BEFORE THE EUROPEAN PATENT OFFICE

KARL LUDWIG SCHIFF (1964-1978)
DIPL CHEM. DR. ALEXANDER v FÜNER
DIPL ING. PETER STREHL
DIPL. CHEM DR. URSULA SCHÜBEL-HOPF
DIPL. ING. DIETER EBBINGHAUS
DR. ING. DIETER FINCK

TELEFON (089) 482054
TELEX 5-23565 AURO D
TELEGRAMME AUROMARCPAT MÜNCHEN

AKADEMIA GÓRNICZO-HUTNICZA          10. Juli 1981
im. Stanisława Staszica             EPA-22097


Meßschaltung einer Vorrichtung zur Messung der Konzentration von Gemischbestandteilen

Beschreibung:

Die Erfindung betrifft eine Meßschaltung einer Einrichtung zur Messung der Konzentration von Gemischbestandteilen.

Das aus der DE-OS 24 32 693 bekannte Gerät zur kapazitiven Messung des Mischungsverhältnisses eines in einer Rohrleitung transportierten Gemisches enthält einen in einer Durchflußrohrleitung angeordneten kapazitiven Geber und einen Temperaturfühler, wobei der kapazitive Geber über einen Wandler der elektrischen Kapazität mit einer Temperaturausgleichsschaltung verbunden ist, mit welcher auch der Temperaturfühler verbunden ist. Die Temperaturausgleichsschaltung ist mit einer Anzeige-Registrierschaltung verbunden. Der Wandler der elektrischen Kapazität enthält einen Bezugsgenerator und einen Meßgenerator, dessen erster Ausgang mit dem Meßfühler und dessen zweiter Ausgang mit der Ausgleichsschaltung verbunden ist. Der Ausgang des Meßgenerators und der Ausgang des Bezugsgenerators sind über einen Mischer mit dem Pfad zur Bildung des Differenzsignals verbunden, und zwar über eine Reihenschaltung aus einem Tiefpaß, einem Verstärker und Begrenzer der Amplitude und einer Differentialschaltung, einem Impulsbegrenzer, einem Standardimpulsgenerator und einer Integrierschaltung, deren Ausgang den Ausgang des Wandlers der elektrischen Kapazität bildet. Die Verbindung zwischen der Schaltung des Ausganges des Meßgenerators mit dem Mischer weist eine mit dem Eingang der Ausgleichsschaltung verbundene Abzweigung auf.

Ein Nachteil dieses Gerätes besteht darin, daß für jeden kapazitiven Geber individuell seine Meßschaltung geeicht und jeweils die Empfangsschaltung an die Senderschaltung auf die gegebene Übertragungsleitungslänge abgestimmt werden muß.

Außerdem bietet das Gerät keine Möglichkeit der Prüfung der Richtigkeit seiner Anzeigen sowie einer Korrektur falscher Anzeigen. Ein weiterer Nachteil des Gerätes besteht in der fehlenden Meldung des Überschreitens der Ausgleichsmöglichkeitsgrenze des Einflusses der Resistenz des zu messenden Gemisches und in der fehlenden Zeitintegrierschaltung, was bei der Messung der Konzentration von Gemischbestandteilen in einem inhomogenen Gemisch die Durchführung der durchschnittlichen Ablesungen seiner Anzeigen unmöglich macht. Ein weiterer Nachteil des Gerätes besteht in der Instabilität seiner Arbeit bei verschiedenen Umgebungstemperaturen, was auf den negativen Einfluß der Temperaturänderungen auf die Stabilität der Arbeit seiner Generatoren zurückzuführen ist. Ein weiterer zusätzlicher Nachteil des Gerätes besteht in der fehlenden Möglichkeit der Bezugnahme des gemessenen Wertes der Konzentration der Gemischbestandteile auf normale Bedingungen.

Der Erfindung liegt die Aufgabe zugrunde, die oben erwähnten Nachteile zu beseitigen.

Das Wesen der Erfindung besteht in einer Meßschaltung einer Vorrichtung zur Messung der Konzentration von Gemischbestandteilen, enthaltend zwei einen Konzentrationswandler bildende Vergleichspfade der Eich- und Meßfrequenzsignale, die am Ausgang parallel mit dem Mischer geschaltet sind, wobei in dem Pfad der Eichfrequenzsignale ein Hochfrequenzbezugsgenerator und in dem Pfad der Meßfrequenzsignale ein Meßgenerator enthalten ist. Außerdem ist der Mischer über einen Verstärker mit der Schaltung zur weiteren Signalverarbeitung verbunden, welche eine Normalisierungsschaltung des Differenzsignals und eine Konzentrationsanzeigeschaltung enthält.

In dem Pfad der Eichfrequenzsignale ist der Hochfrequenzbezugsgenerator mit dem Mischer über die Reihenschaltung aus erstem Hochfrequenzverstärker und erster Abscheiderschaltung verbunden.

In dem Pfad der Meßfrequenzsignale ist der Meßgenerator mit einer Schaltung zur automatischen Amplitudenregelung und mit einer Abgleichschaltung versehen und mit dem Mischer über eine Reihenschaltung aus einem zweiten Hochfrequenzverstärker und einer zweiten Abscheiderschaltung verbunden. Der Verstärker ist mit der Schaltung zur weiteren Signalverarbeitung über den Sender der Übertragungsleitung verbunden. Die Schaltung zur weiteren Signalverarbeitung enthält einen in Reihe über eine Normalisierungsschaltung des Differenzsignals und eine regelbare Zeitintegrierschaltung geschalteten Empfänger der Übertragungsleitung und einen Eingangsverstärker zur Konzentrationsanzeigeschaltung. Der Ausgangsverstärker ist mit zusätzlichen Anschlußbuchsen ausgerüstet, welche zur Parallelschaltung des Registriergerätes und des Analog-Digitalwandlers vorgesehen ist. Mit dem Meßgenerator des Kapazitätswandlers sind über eine

- 4 -

Umschaltschaltung die Buchse des kapazitiven Gebers und die Skalenkalibrierschaltung verbunden. Mit dem Meßgenerator sind ferner über eine Addierschaltung des Einflusses der Resistenz-, Temperatur- und Druckänderungen des Gemisches ein erster, ein zweiter und ein dritter Funktionsdiodengenerator geschaltet. Mit dem ersten Funktionsgenerator ist die Anschlußbuchse des Temperaturfühlers über den Gemischtemperaturwandler verbunden.

Mit dem zweiten Funktionsgenerator ist eine Anschlußbuchse der Druckmeßdose über einen Gemischdruckwandler verbunden. Mit dem dritten Funktionsgenerator ist die Anschlußbuchse des Resistenzfühlers über einen Gemischresistenzwandler verbunden. An den Gemischresistenzwandler ist eine Meldeanzeige über eine Grenzresistenzschaltung angeschlossen. Die Umschaltschaltung und die Abgleichschaltung und Skalenkalibrierschaltung sind entsprechend mit Fernsteuerschaltungen versehen. Der Kapazitätswandler und die Umschaltschaltung sowie die Skalenkalibrierschaltung, wie auch der Verstärker und der Sender der Übertragungsleitung, vorzugsweise samt der Addierschaltung des Einflusses der Resistenz-, Temperatur- und Druckänderungen des Gemisches und mit den Funktionsdiodengeneratoren sind in einem durch einen elektrischen und thermischen Schirm umhüllten Thermostat versehen, und die Schaltung zur weiteren Signalverarbeitung, vorzugsweise samt den Fernsteuerschaltungen und der Meldeanzeige, ist in dem dazu gehörigen Gehäuse angeordnet. Sämtliche in dem durch den elektrischen und thermischen Schirm umhüllten Thermostat angeordneten Schaltungen sind über die Übertragungsleitung mit entsprechenden, in dem Gehäuse untergebrachten Schaltungen verbunden.

Ein Vorteil der erfindungsgemäßen Meßschaltung einer Vorrichtung zur Messung der Konzentration von Gemischbestandteilen besteht in deren Einsatzmöglichkeit als Geber mit verschiedener Kondensatorkapazität. Sie ist einfach be-

- 5 -

treibbar und kann in verschiedene Meßstellen übetragen werden. Sie kann ferner zur Zusammenarbeit mit den Einrichtungen der industriellen Automatik benutzt werden und ist sowohl für die Überwachung von Arbeitsverfahren als auch für wissenschaftliche Laboruntersuchungen geeignet.

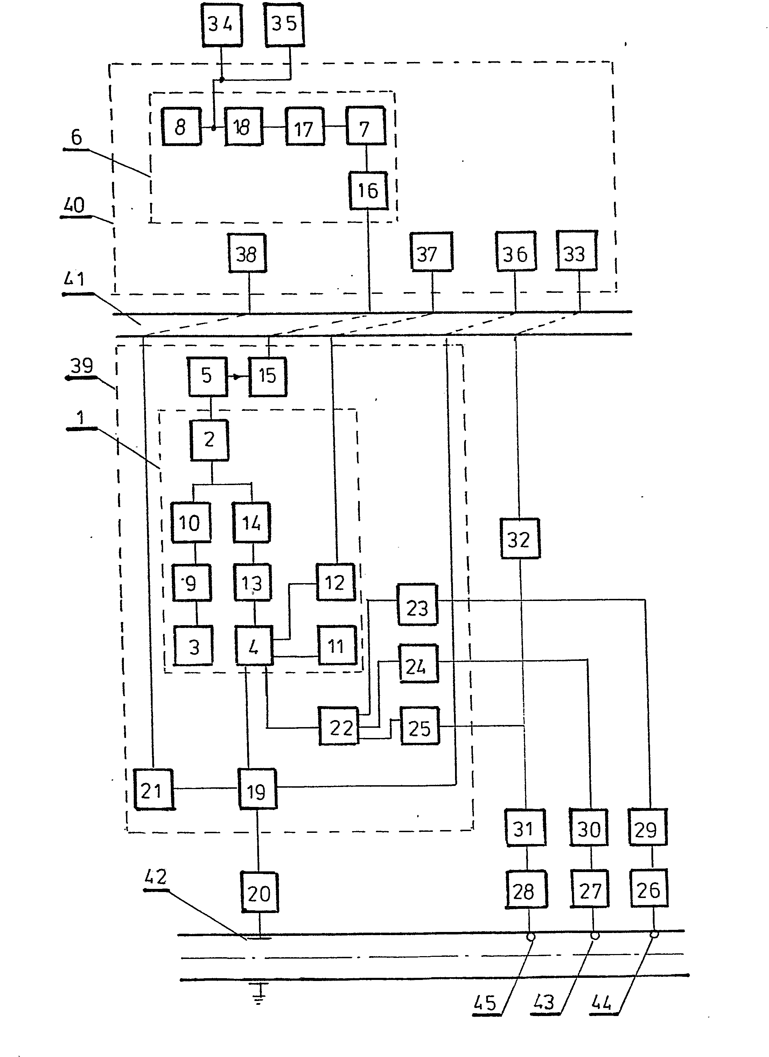

Die Erfindung wird im folgenden anhand des in der Zeichnung gezeigten Ausführungsbeispiels näher erläutert. Die Zeichnung zeigt das Blockschaltbild einer Meßschaltung.

Die Meßschaltung enthält zwei einen Kapazitätswandler 1 bildende Vergleichspfade für Eich- und Meßfrequenzsignale, welche am Ausgang parallel mit einem Mischer 2 geschaltet sind. In dem Pfad der Eichfrequenzsignale befindet sich ein Hochfrequenzbezugsgenerator 3, in dem Pfad der Meßfrequenzsignale ein Meßgenerator 4. Der Mischer 2 ist über einen Verstärker 5 mit einer Schaltung 6 zur weiteren Verarbeitung des Signals geschaltet, welche eine Differenzsignalnormalisierungsschaltung 7 und eine Konzentrationsanzeigeschaltung 8 enthält.

In dem Pfad der Eichfrequenzsignale ist der Hochfrequenzbezugsgenerator 3 über einen ersten Hochfrequenzverstärker 9 und eine erste Abscheiderschaltung 10 mit dem Mischer 2 verbunden. In dem Pfad der Meßfrequenzsignale ist der Meßgenerator 4 mit einer Schaltung zur automatischen Regelung der Amplitude 11 und mit einer Abgleichschaltung 12 versehen und über einen zweiten Hochfrequenzverstärker 13 und eine zweite Abscheideschaltung 14 mit dem Mischer 2 verbunden. Die Abgleichschaltung 12 enthält als Arbeitsglied eine in den Resonanzkreis des Meßgenerators 4 geschaltete Kapazitätsdiode. Der Verstärker 5 ist mit der Schaltung 6 zur weiteren Verarbeitung des Signals über den Sender 15 der Übertragungsleitung verbunden. Die Schaltung 6 zur weiteren Signalverarbeitung enthält einen in Reihe über eine Differenzsignalnormalisierungsschaltung 7 und eine

- 6 -

regelbare Zeitintegrierschaltung 17 geschalteten Empfänger 16 der Übertragungsleitung und einen Ausgangsverstärker 18 mit der Konzentrationsanzeigeschaltung 8. Der Ausgangsverstärker 18 ist mit zusätzlichen Anschlußbuchsen 34 und 35 versehen, welche zur Parallelschaltung des Registriergerätes und des Analog-Digitalwandlers vorgesehen sind. Mit dem Meßgenerator 4 des Kapazitätswandlers 1 sind über die Umschaltschaltung 19 die Buchse des kapazitiven Gebers 20 und die Skalenkalibrierschaltung 21 verbunden. Die Skalenkalibrierschaltung 21 enthält als Arbeitsglieder kapazitive Dioden, die über die Umschaltschaltung 19 mit dem Resonanzkreis des Meßgenerators 4 verbunden sind. Mit dem Meßgenerator 4 sind weiter über die Addierschaltung 22 der Einflüsse der Resistenz-, Temperatur- und Druckänderungen des Gemisches ein erster, ein zweiter und ein dritter Diodenfunktionsgenerator 23, 24 bzw. 25 verbunden. Mit dem ersten Funktionsgenerator 23 ist die Anschlußbuchse 26 des Temperaturfühlers 43 über den Gemischtemperaturwandler 29 verbunden. Mit dem zweiten Funktionsgenerator 24 ist eine Anschlußbuchse 27 der Druckmeßdose 44 über den Gemischdruckwandler 30 verbunden. Mit dem dritten Funktionsgenerator 25 ist die Anschlußbuchse 28 des Resistenzgebers 45 über den Gemischtemperaturwandler 31 verbunden. An den Gemischresistenzwandler 31 ist über die Grenzresistenzschaltung 32 eine Meldeanzeige 33 angeschlossen. Die Umschaltschaltung 19, die Abgleichschaltung 12 und die Skalenkalibrierschaltung 21 sind mit Fernsteuerschaltungen 36, 37 bzw. 38 versehen. Der Kapazitätswandler 1, die Umschaltschaltung 19 und die Skalenkalibrierschaltung 21, sowie der Verstärker 5 und der Sender 15 der Übertragungsleitung, vorzugsweise samt der Addierschaltung 22 der Einflüsse der Resistenz-, Temperatur- und Druckänderungen des Gemisches und den Diodenfunktionsgeneratoren 23 bis 25 sind in einem durch einen elektrischen und thermischen Schirm 39 umhüllten Thermostat untergebracht. Der Thermostat samt dem thermischen Schirm sichert die Erhaltung der in dem

Thermostat befindlichen Baugruppen bei einer positiven Temperatur, die die höchste Plustemperatur der Umgebung des Einbauortes des Gebers um wenigstens ein Grad überschreitet. Ferner schützt der elektrische Schirm die in dem Thermostat enthaltenen Baugruppen vor dem negativen Einfluß der äußeren elektromagnetischen Felder. Die Schaltung 6 zur weiteren Verarbeitung des Signals, vorzugsweise samt den Fernsteuerschaltungen 36 bis 38 und der Meldeanzeige 33 ist in einem dazugehörigen Gehäuse 40 untergebracht. Sämtliche in dem durch einen elektrischen und thermischen Schirm 39 umhüllten Thermostat untergebrachten Schaltungen sind durch eine Übertragungsleitung 41 mit entsprechenden im Gehäuse 40 untergebrachten Schaltungen verbunden.

Unter Betriebsbedingungen der erfindungsgemäßen Meßschaltung einer Vorrichtung zur Messung der Konzentration von Gemischbestandteilen werden vor dem Meßbeginn die in die Förderleitung eingebauten kapazitiven Geber 42, Temperaturfühler 43, Druckmeßdosen 44 und Widerstands- oder Resistenzfühler 45 mit den entsprechenden Anschlußbuchsen 20, 26, 27 und 28 verbunden. Dann wird die Differenzfrequenz durch Frequenzänderung des Meßgenerators 4 mittels der Abgleichschaltung 12 auf Null gebracht. Nachdem der kapazitive Geber 42 durch die Umschaltschaltung 19 abgeschaltet und die Skalenkalibrierschaltung 21 durch die Umschaltschaltung 19 mit dem Meßgenerator 4 verbunden ist, werden weiter für jeden kapazitiven Geber 32 des zu messenden Gemisches in der Skalenkalibrierschaltung 21 die Grenzwerte der der Reihe nach dem Null- und dem Höchstanteil des Bestandteiles in dem Gemisch entsprechenden Werte der Kapazität festgestellt, welche den Grenzwerten des Meßbereiches der Konzentrationsanzeigeschaltung 8 für das jeweilige Gemisch entsprechen.

Während der Konzentrationsmessung der Gemischbestandteile bewirken die Kapazitätsänderungen des kapazitiven Gebers 42 und die Resistenzänderungen des zu messenden Gemisches eine Änderung der Frequenz des Meßgenerators 4. Die Kapazitätsänderungen des kapazitiven Gebers 42 werden durch Änderungen der resultierenden elektrischen Durchlässigkeit verursacht, die von der Konzentration der Bestandteile des zu messenden Gemisches, von seiner Temperatur und seinem Druck abhängig ist. Das Signal aus dem Meßgenerator 4 wird dann in dem Verstärker 13 verstärkt und durch die zweite Abscheideschaltung 14 dem Mischer 2 zusammen mit dem im Pfad 3, 9 und 10 der Eichfrequenzsignale erzeugten Signal zugeführt. Infolgedessen wird am Ausgang des Mischers 2 ein Differenzfrequenzsignal erzeugt. Dieses Signal wird nach der Verstärkung in dem Verstärker 5 der Reihe nach über den Sender 15 der Übertragungsleitung und die Übertragungsleitung 41 dem Empfänger 16 der Übertragungsleitung und weiter der Differenzsignalnormalisierungsschaltung 7 zugeführt, in der das Differenzsignal in eine ihm entsprechende Impulsfolge mit konstanter Amplitude und konstanter Impulsdauer umgesetzt wird. Aus der Differenzsignalnormalisierungsschaltung 7 wird die Impulsfolge der regelbaren Zeitintegrierschaltung 17 zugeführt, in der diese Impulse integriert werden, wodurch ein zu der Differenzfrequenz proportionales Spannungssignal erhalten wird. Dieses Signal wird nach der Verstärkung im Ausgangsverstärker 18 durch die Anzeigeschaltung 8 gemessen, gleichzeitig durch das Registriergerät registriert und durch den Analog-Digitalwandler umgewandelt. Gleichzeitig mit der Kapazitätsmessung erfolgt die Temperatur-, Druck- und Resistenzmessung des zu messenden Gemisches durch die entsprechenden Geber 43, 44 und 45. Die Meßergebnisse werden durch die entsprechenden Wandler 29 bis 31 umgesetzt und in Form von elektrischen Signalen über die entsprechenden Funktionsgeneratoren 23 bis 25 der Addierschaltung 22 zuge-

0044056

- 9 -

führt, von der sie als Gesamtsignal zum Meßgenerator 4 gelangen. Dieses Signal bewirkt einen Ausgleich des Einflusses der Temperatur, des Druckes und der Resistenz des zu messenden Gemisches auf die Frequenz des Meßgenerators 4, wodurch die Frequenz des Meßgenerators 4 nur von den Kapazitätsänderungen des kapazitiven Gebers abhängig wird. Das Überschreiten der Ausgleichmöglichkeitsgrenze des Einflusses der Resistenzänderungen des zu messenden Gemisches wird durch die Grenzresistenzschaltung 32 durch die Meldeanzeige 33 angezeigt. Der Einfluß der Resistenz des kapazitiven Gebers 20 auf die Schwingungsamplitude des Meßgenerators 4 wird durch die Schaltung 11 zur automatischen Amplitudenregelung ausgeglichen.

Der vor dem Beginn der Konzentrationsmessung der Gemischbestandteile auf Null gebrachte Wert der Differenzfrequenz kann gleich gut auf eine von Null abweichende konstante Höhe festgelegt werden.

## Patentansprüche:

1. Meßschaltung zur Messung der Konzentration von Gemischbestandteilen, mit einem durch zwei Vergleichspfade der Eich- und Meßfrequenzsignale gebildeten Kapazitätswandler (1), die parallel an den Ausgang eines Mischers (2) angeschlossen sind, wobei in dem Pfad der Eichfrequenzsignale ein Hochfrequenzbezugsgenerator (3) und in dem Pfad der Meßfrequenzsignale ein Meßgenerator (4) enthalten ist, und außerdem der Mischer (2) über einen Verstärker (5) mit einer Schaltung (6) zur weiteren Verarbeitung des Signals verbunden ist, welche eine Differenzsignalnormalisierungsschaltung (7) und eine Konzentrationsanzeigeschaltung (8) enthält, dadurch g e k e n n z e i c h n e t , daß in dem Pfad der Eichfrequenzsignale der Hochfrequenzbezugsgenerator (3) über einen ersten Hochfrequenzverstärker (9) und eine erste Abscheideschaltung (10) mit dem Mischer (2) und in dem Pfad der Meßfrequenzsignale der Meßgenerator (4) mit einer Schaltung (11) zur automatischen Amplitudenregelung und mit einer Abgleichschatlung (12) versehen und mit dem Mischer (2) über einen zweiten Hochfrequenzverstärker (13) und eine zweite Abscheideschaltung (14) verbunden ist, daß der Verstärker (5) mit der Schaltung (6) zur weiteren Verarbeitung des Signals über einen Sender (15) der Übertragungsleitung verbunden ist, wobei die Schaltung (6) zur weiteren Signalverarbeitung einen in Reihe über die Differenzsignalnormalisierungsschaltung (7) und eine regelbare Zeitintegrierschaltung (17) geschalteten Empfänger (16) der Übertragungsleitung und einen Ausgangsverstärker (18) mit einer Konzentrationsanzeigeschaltung (8) aufweist, daß mit dem Meßgenerator (4) des Kapazitätswandlers (1) über die Umschaltschaltung (19) die Buchse eines kapazitiven Gebers (20) und eine Skalenkalibrierschaltung (21), und mit dem Meßgenerator (4) weiter über eine Addierschaltung (22) des Einflusses der Resistenz-, Temperatur- und Druckänderungen des Gemisches ein erster, zweiter bzw. dritter Diodenfunktionsgenerator (23, 24 bzw.25) verbunden ist, wobei mit dem ersten Funktionsgenerator (23) über einen Gemischtemperaturwandler (29) die Buchse (26) eines Temperaturfühlers (43), mit dem zweiten Funktionsgenerator (24) über den Gemischdruckwandler (30) die Anschlußbuchse (27) einer Druckmeßdose (44) und mit dem dritten Funktionsgenerator (25) über einen Gemischresistenzwandler (31) eine Anschlußbuchse (28) des Resistenzfühlers verbunden ist, und daß an den Gemischeresistenzwandler (31) über eine Grenzresistenzschaltung (32) eine Meldeanzeige (33) angeschlossen ist.

2. Meßschaltung nach Anspruch 1, dadurch g e k e n n - z e i c h n e t , daß der Ausgangsverstärker (18) mit zusätzlichen Anschlußbuchsen (34, 35) versehen ist, welche zur Parallelschaltung des Registriergerätes und des Analog-Digitalwandlers vorgesehen sind.

3. Meßschaltung nach Anspruch 1, dadurch g e k e n n - z e i c h n e t , daß die Umschaltschaltung (19) und die Abgleichschaltung (12) sowie die Skalenkalibrierschaltung (21) mit entsprechenden Fernsteuerungsschaltungen (36, 37, 38) versehen sind.

4. Meßschaltung nach einem der Ansprüche 1 bis 3, dadurch g e k e n n z e i c h n e t , daß der Kapazitätswandler (1) und die Addierschaltung (22) der Einflüsse der Resistenz-, Temperatur- und Druckänderungen des Gemisches samt den Diodenfunktionsgeneratoren (23, 24, 25) sowie die Umschaltschaltung (19) und die Skalenkalibrierschaltung (21) sowie der Verstärker (5) und der Sender (15) der Übertragungsleitung in einem durch einen elektrischen und thermischen Schirm (39) umhüllten Thermostat angeordnet sind, und die Schaltung (6) zur weiteren Signalverarbeitung, vorzugsweise samt den Fernsteuerschaltungen (36, 37, 38) und der Meldeanzeige (33), in einem dazugehörigen Gehäuse (40) untergebracht ist.

5. Meßschaltung nach den Ansprüchen 1 und 4, dadurch g e k e n n z e i c h n e t , daß sämtliche in dem durch den elektrischen und thermischen Schirm (39) umhüllten Thermostat untergebrachten Schaltungen durch die Übertragungsleitung (41) mit den entsprechenden im Gehäuse (40) untergebrachten Schaltungen verbunden sind.